# EUROPÄISCHE PATENTSCHRIFT

(11) **EP 2 989 594 B1**
(45) Veröffentlichungstag und Bekanntmachung des Hinweises auf die Patenterteilung: **07.04.2021**
(21) Anmeldenummer: 14707984.2
(22) Anmeldetag: 27.02.2014
(51) Int. Cl.: G06K 9/32, G06K 9/20, G06K 9/62, G06T 7/73

(54) **VORRICHTUNG UND VERFAHREN ZUM ERKENNEN VON BESCHRIFTUNGEN AUF FAHRZEUGREIFEN**
DEVICE AND METHOD FOR RECOGNISING INSCRIPTIONS ON VEHICLE TYRES
DISPOSITIF ET PROCÉDÉ D'IDENTIFICATION D'INSCRIPTIONS SUR DES PNEUS DE VÉHICULES

(30) Priorität: 23.04.2013 DE 102013207374
(43) Veröffentlichungstag der Anmeldung: 02.03.2016
(73) Patentinhaber: Beissbarth GmbH, 80993 München (DE)
(72) Erfinder: NOBIS, Guenter, 72622 Nuertingen (DE); KLAR, Michael, 74177 Bad Friedrichshall (DE); UFFENKAMP, Volker, 71642 Ludwigsburg (DE); HANEL, Christian, 71229 Leonberg (DE)
(74) Vertreter: Schmitt-Nilson Schraud Waibel Wohlfrom Patentanwälte Partnerschaft mbB
(86) Internationale Anmeldenummer: PCT/EP2014/053809
(87) Internationale Veröffentlichungsnummer: WO 2014/173564

(56) Entgegenhaltungen:
- WO-A1-96/10727
- JP-A- 2003 121 111

## Beschreibung

Die Erfindung bezieht sich auf ein Verfahren zum Erkennen von Beschriftungen auf Fahrzeugreifen, insbesondere auf Reifen von Kraftfahrzeugen und auf eine Vorrichtung, die zur Durchführung eines erfindungsgemäßen Verfahrens ausgebildet ist.

### Stand der Technik

Auf den Seitenwänden (Flanken) von Reifen aufgebrachte Beschriftungen enthalten häufig Informationen, die für Werkstätten, Prüforganisationen, Tankstellen und/oder Betreiber von Fahrzeugflotten, aber auch für Reifenhersteller und Reifenhändler von Bedeutung sind. Durch eine automatische Erkennung der Beschriftungen können wertvolle Arbeitszeit gespart und Arbeitsabläufe effizienter gestaltet werden.

Zur automatischen Erkennung der Beschriftung auf Reifenflanken, die Ziffern, Buchstaben und Symbole umfassen kann, sind eine Reihe von Verfahren und Vorrichtungen bekannt, insbesondere bildgebende optische Verfahren. Problematisch dabei ist, dass die Beschriftung von Reifenflanken in der Regel aus schwarzen Zeichen auf einem schwarzen Hintergrund besteht, die sich nur durch eine Erhöhung oder eine Vertiefung als Reliefschrift von der Fläche der Seitenwand abheben. Daraus resultiert ein geringer optischer Kontrast zwischen der Beschriftung und dem Hintergrund. Eine automatische Erkennung der Beschriftung mit zweidimensionalen bildgebenden Verfahren ist daher schwierig.

Zur Verbesserung des Kontrastes wurden verschiedene Verfahren vorgeschlagen: In EP 0 240 078 B1 und EP 0 294 530 wird der durch eine gerichtete Beleuchtung erzeugte Schattenwurf der Reliefschrift ausgenutzt. In DE 24 47 480 ist beschrieben, dass Intensitätsunterschiede zwischen reflektiertem und diffus gestreutem Licht eine Zeichenerkennung ermöglichen.

In US 6 735 337 B2 und US 6 856 697 B2 wird zur Zeichenerkennung die Verwendung der Korrelation mit mehreren partiellen Musterschablonen ("Templates") pro Zeichen vorgeschlagen, woraus eine Wahrscheinlichkeit abgeleitet wird, ob das Zeichen korrekt erkannt worden ist, obwohl evtl. nicht alle Kanten des Zeichens sichtbar sind.

Eine Reihe anderer Ansätze umgeht die Problematik des Kontrastes bei zweidimensionalen Verfahren durch den Einsatz von 3D-Verfahren, insbesondere Lichtschnittverfahren mit Laserlinien. EP 1 332 334 B2, WO 03/023699 A1, DE 10 2008 023 936 A1 und US 7 295 948 B2 beschreiben die Segmentierung bzw. Erkennung von Schriftzeichen auf Basis einer 3D-Punktewolke, die mit einem Laserscanner in einem Lichtschnittverfahren generiert wird.

Allen bisher genannten Verfahren ist gemeinsam, dass der Reifen demontiert und in einer speziellen Einrichtung unter der Erfassungseinheit gedreht werden muss. Somit sind diese Verfahren mit einem hohen manuellen und apparativen Aufwand verbunden.

Eine Schrifterkennung auf Reifenflanken vorbeifahrender Fahrzeuge wird in der WO 96/10727 erwähnt. In der WO 97/07380 wird ein System beschrieben, das mit einem 3D-Lichtschnittverfahren Deformationen der Reifenseitenwände in der Vorbeifahrt erkennt. Ein ähnliches Vorgehen ist in der EP 0 816 799 beschrieben. Zur Datenaufnahme einer kompletten Reifenflanke muss hier das Rad demontiert sein, oder das Fahrzeug muss auf einem Rollenprüfstand stehen, oder das Aufnahmesystem muss am Fahrzeug befestigt werden, so dass es sich mit dem Fahrzeug mitbewegt.

Eine Aufgabe der Erfindung ist es, eine Vorrichtung und ein Verfahren zum zuverlässigen Erkennen von Beschriftungen auf Fahrzeugreifen bereit zu stellen, wobei die Reifen während des Erkennungsvorgangs am Fahrzeug montiert bleiben können.

### Offenbarung der Erfindung

Ein erfindungsgemäßes Verfahren zum Erkennen einer Beschriftung, die auf der Flanke eines Fahrzeugreifens aufgebracht ist, schließt ein, den Fahrzeugreifen mit wenigstens einer Lichtquelle gerichtet zu beleuchten, während das Fahrzeug an wenigstens einer Kamera vorbeifährt und von der Kamera mehrere Bilder des an der Kamera vorbeirollenden Reifens aufgenommen werden. Aus den mehreren aufgenommenen Bildern wird ein Bild der Flanke des Reifens synthetisiert und das synthetisierte Bild wird mittels eines Texterkennungsverfahrens (OCR-Methode) ausgewertet, um die auf der Flanke des Reifens aufgebrachte Beschriftung zu erkennen.

Eine erfindungsgemäße Vorrichtung zum Erkennen der Beschriftung auf einem Fahrzeugreifen hat eine Fahrbahnebene, wenigstens eine Lichtquelle, die ausgebildet ist, um den Fahrzeugreifen gerichtet zu beleuchten, wenigstens eine Kamera, die ausgebildet ist, um mehrere Bilder eines auf der Fahrbahnebene abrollenden Reifens aufzunehmen, und eine Auswertevorrichtung, die ausgebildet ist, aus den mehreren von der Kamera aufgenommenen Bildern ein Bild der Flanke des Fahrzeugreifens zu synthetisieren und das synthetisierte Bild mit einen Texterkennungsverfahren auszuwerten.

Die vorliegende Erfindung beschreibt eine Lösung, mit der während der Vorbeifahrt des Reifens eine robuste automatische Reifenidentifikation ohne aufwändige und teuer zu realisierende Systeme erfolgen kann. Insbesondere vermeidet die Erfindung diverse Nachteile herkömmlicher Lösungen, wie z.B. komplexe mechanische Aufbauten, störanfällige mechanisch bewegte Elemente, einen hohen Zeitaufwand zum Demontieren und Montieren der Reifen und/oder hohe Investitionskosten für eine komplexe Messtechnik und/oder zusätzlich notwendige Komponenten wie z.B. einen Rollenprüfstand.

Die Erfindung kann sowohl in Verbindung mit herkömmlichen 2D-Bildern als auch mit 3D-Bildern, die mit einer 3D-Kamera aufgenommen worden sind, eingesetzt werden.

In einer erfindungsgemäßen Vorrichtung schließt das Synthetisieren eines Bildes der Flanke des Kraftfahrzeugreifens ein, die Bewegung lokaler Bereiche der Flanke zwischen zwei Bildern algorithmisch zu bestimmen. Eine derartige algorithmische Bestimmung ermöglicht es, alle Bilder der Bildsequenz auf ein zentrales Bild zurückzurechnen und zu einem einzigen Bild zusammenzusetzen.

In einer Ausführungsform sind entlang der Abrollrichtung des Reifens mehrere Lichtquellen in einer Linie angeordnet. Eine derartige Anordnung ermöglicht es, den Reifen während der gesamten Vorbeifahrt an der Kamera hinreichend gut zu beleuchten.

In einer Ausführungsform sind mehrere Lichtquellen in verschiedenen Abständen bzw. Höhen über der Fahrbahnebene angeordnet. Eine solche Anordnung ermöglicht es, verschiedene Reifen, die unterschiedliche Durchmesser haben, gut zu beleuchten.

In einer Ausführungsform sind mehrere Lichtquellen an verschiedenen Positionen quer zur Abrollrichtung des Reifens ausgebildet. Dies ermöglicht es, die Reifen von Fahrzeugen mit unterschiedlicher Spurweite gut zu beleuchten.

In einer Ausführungsform weist jede der Lichtquellen individuell ansteuerbare Beleuchtungselemente auf. Durch individuelles Ansteuern der einzelnen Beleuchtungselemente ist die Beleuchtung gut an die aktuellen (Umgebungs-)Lichtverhältnisse anpassbar.

In einer Ausführungsform sind die Lichtquellen so ausgebildet, dass sie den Reifen mit Licht unterschiedlicher Wellenlänge beleuchten. Auf diese Weise ist es möglich, den Reifen gleichzeitig aus mindestens zwei verschiedenen Richtungen mit Licht unterschiedlicher Wellenlänge (z.B. mit rotem und blauem Licht) zu beleuchten. Anschließend werden die einzelnen Farbkanäle für jedes aufgenommene Bild getrennt. Da der Reifen mit Licht der ersten Wellenlänge aus einer anderen Beleuchtungsrichtung beleuchtet worden ist, als mit Licht der zweiten Wellenlänge, werden auf diese Weise die Anzahl der zur Bildsynthese verfügbaren Ansichten der Reifenflanke erhöht.

Die Beleuchtungseinrichtungen können Infrarot-LEDs enthalten. Infrarot-LEDs sind besonders gut geeignete Beleuchtungsmittel, da sie kein sichtbares Licht abstrahlen und so den Fahrer des Fahrzeugs nicht irritieren.

Die Beleuchtungseinrichtungen können im Blitzmodus betrieben werden, wodurch deren Lichtintensität noch weiter gesteigert werden kann.

Alternativ oder zusätzlich kann eine Spiegelanordnung vorgesehen sein, die es ermöglicht, Sonnenlicht und/oder Licht von den Scheinwerfern des Kraftfahrzeugs auf die Reifen umzulenken, um natürliches Sonnenlicht und/oder die Scheinwerfer des Kraftfahrzeugs als Lichtquelle zur Beleuchtung der Reifen zu verwenden. Natürliches Sonnenlicht und die Scheinwerfer des Kraftfahrzeugs stellen eine kostengünstige und gut geeignete Lichtquelle zur Beleuchtung der Reifen zur Verfügung. Insbesondere das Fernlicht eines Fahrzeugs ist eine intensive und annähernd parallel abstrahlende Lichtquelle. Ausführungsbeispiele der Erfindung werden im Folgenden anhand der beigefügten Figuren näher erläutert.

### Kurze Beschreibung der Figuren:

Figur 1 zeigt den Aufbau eines Ausführungsbeispiels einer Vorrichtung zur Erkennung der Beschriftung auf einem Fahrzeugreifen in der Draufsicht.
Figur 2 zeigt schematisch die Erzeugung eines einzelnen Bildes mit kontrastreichen Abbildungen aller Kanten durch eine Bildsequenzanalyse.
Figur 3 zeigt ein Beispiel einer möglichen Anordnung mehrerer Lichtquellen.
Figur 4 zeigt schematisch eine Umlenkoptik mit mehreren Spiegeln zur Beleuchtung einer Reifenflanke.
Figur 5 zeigt schematisch ein Ausführungsbeispiel einer Vorrichtung zur Erkennung von Reifenbeschriftungen.
Figuren 6a und 6b zeigen ein Flussdiagramm eines erfindungsgemäßen Verfahrens zum Erkennen von Reifenbeschriftungen.

### Figurenbeschreibung

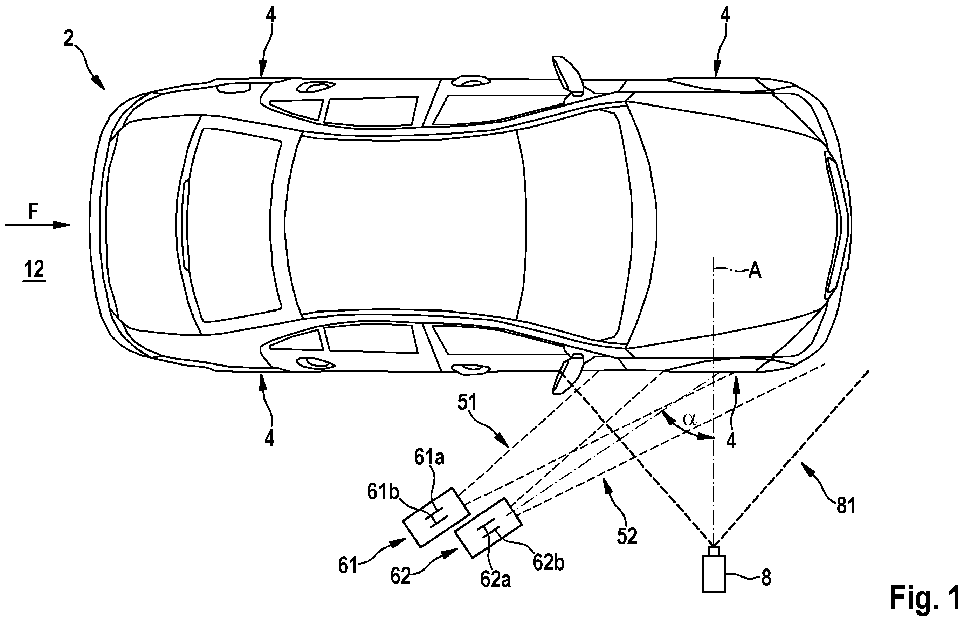

Figur 1 zeigt den Aufbau eines Ausführungsbeispiels einer Vorrichtung zur Erkennung von Beschriftungen auf einem Fahrzeugreifen 4 in der Draufsicht.

Um die Schrifterkennung durchzuführen, fährt ein Fahrzeug 2 auf einer Fahrbahnebene 12 in Fahrtrichtung F von links nach rechts an der Vorrichtung vorbei. Während der Vorbeifahrt des Fahrzeugs 2 wird mit mindestens einer Videokamera 8 eine Bildsequenz, die mehrere Bilder umfasst, des unteren Teils des Fahrzeugs 2, insbesondere seiner Räder bzw. Reifen 4, aufgenommen.

Zur Beleuchtung der Reifen 4 werden in dem in der Figur 1 gezeigten Ausführungsbeispiel zwei gerichtete Lichtquellen 61, 62 verwendet, die seitlich versetzt zur Videokamera 8 aufgestellt sind und die Reifen 4 mit jeweils annähernd parallelen Lichtstrahlen 51, 52 in einem möglichst großen Winkel α (< 90 Grad) zur optischen Achse A der Kamera 8 beleuchten. Die Kamera 8 und die Lichtquellen 61, 62 sind fest installiert und werden während der Aufnahme der Bildsequenz nicht bewegt. Die Lichtquellen 61, 62 weisen jeweils zwei getrennt ansteuerbare Beleuchtungselemente 61a, 61b, 62a, 62b auf. Die Anzahl von zwei Lichtquellen 61, 62 mit jeweils zwei getrennt ansteuerbaren Beleuchtungselementen 61a, 61b, 62a, 62b ist nur beispielhaft; insbesondere können auch mehr als zwei Lichtquellen 61, 62, die jeweils mehr oder weniger als zwei getrennt ansteuerbare Beleuchtungselemente 61a, 61b, 62a, 62b aufweisen, eingesetzt werden.

Da der Reifen 4 während der Aufnahme der Bildsequenz auf der Fahrbahnebene 12 abrollt und in jedem Bild eine andere relative Orientierung zwischen dem Reifen 4 und den Lichtquellen 61, 62 bzw. Kamera vorliegt, wird die Flanke des Reifens 4 in den einzelnen Bildern der Bildsequenz jeweils in einer anderen Ansicht abgebildet. Insbesondere werden die Kanten der Beschriftung, die im aktuellen Bild senkrecht zur Richtung der optischen Achse A der Kamera 8 verlaufen, aufgrund eines Schattenwurfs besonders kontrastreich abgebildet. Für eine robuste Zeichenerkennung sollten aber alle Kanten der Beschriftung, unabhängig von ihrer Richtung zu den Lichtquellen 61, 62, in einem einzigen Bild kontrastreich abgebildet werden.

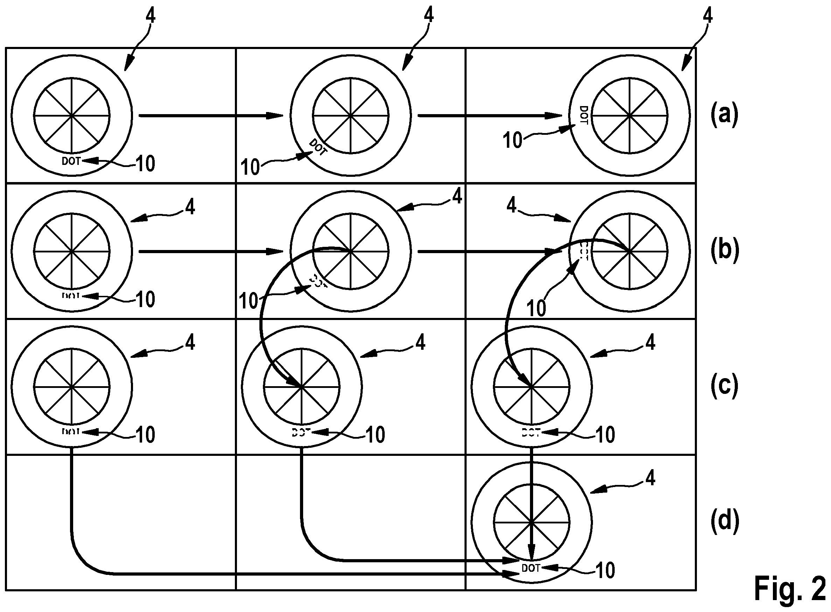

Das erfindungsgemäße Prinzip zum Erzeugen eines einzelnen Bildes mit kontrastreichen Abbildungen aller Kanten mit Hilfe einer Bildsequenzanalyse ist in Figur 2 schematisch dargestellt.

Das Sichtfeld 81 und die Bildrate der Kamera 8 sind so ausgelegt, dass die aufgenommene Bildsequenz mindestens eine Viertelumdrehung des Reifens 4 umfasst.

Exemplarisch ist in Fig. 2 eine Viertelumdrehung des Reifens 4 in drei Bildern gezeigt, wobei die Beschriftung 10 auf der der Kamera 8 zugewandten Seitenwand des Reifens 4 auf die drei Buchstaben "DOT" reduziert ist. Die erste Reihe (a) zeigt die jeweilige Stellung des Reifens 4 in den drei Bildern, die zweite Reihe (b) die zugehörigen Kamerabilder.

Im ersten, links dargestellten Kamerabild ist schematisch angedeutet, dass die senkrechten Kanten der Beschriftung 10 in dieser Stellung des Reifens 4 besonders kontrastreich abgebildet werden. Im dritten, rechts dargestellten Kamerabild hat sich der Reifen 4 weiterbewegt und dabei um 90 Grad gedreht, so dass hier die im ersten Kamerabild waagerecht verlaufenden Kanten der Beschriftung 10, die nach der Drehung des Reifens 4 nun senkrecht verlaufen, besonders kontrastreich abgebildet werden.

Für eine zuverlässige und robuste automatische Erkennung der Beschriftung 10 ist ein einziges Bild notwendig, in dem alle Kanten unabhängig von ihrer Richtung kontrastreich abgebildet sind. Ein solches Bild kann unter Verwendung bekannter Methoden der digitalen Bildsequenzanalyse erzeugt werden, wobei die Erzeugung des Bildes die folgenden Schritte umfasst:
Im ersten Schritt erfolgt eine Aufbereitung der Einzelbilder durch eine Bildvorverarbeitung. Hierzu gehören einerseits radiometrische Korrekturen, wie z.B. eine Beleuchtungsnormierung, die großflächige Inhomogenitäten der Beleuchtungsintensität ausgleicht. Zusätzlich werden geometrische Korrekturen, wie z.B. die Korrektur von Abbildungsverzeichnungen, vorgenommen.

In einem zweiten Schritt erfolgt eine Bildregistrierung mittels einer modellbasierten Bewegungskompensation. Einzelne Punkte auf dem Reifen 4 bewegen sich während des Abrollvorgangs entlang einer Zykloide. Unter Verwendung dieses Modellwissens wird die Bewegung lokaler Bildbereiche zwischen zwei beliebigen Bildern der Bildsequenz algorithmisch bestimmt. Hierzu können verschiedene Bildverarbeitungsmethoden verwendet werden, z.B. eine normierte Kreuzkorrelation der Grauwerte lokaler Bildbereiche, ein Least-Squares-Matching der Grauwerte lokaler Bildbereiche oder Methoden des optischen Flusses. Als Ergebnis erhält man für jeden Bildbereich die Parameter der entsprechenden Zykloidenbewegung. Mit Hilfe dieser Parameter werden nun alle Bilder der Bildsequenz auf ein beliebig herausgegriffenes zentrales Bild, z.B. auf das erste Bild der Sequenz, zurückgerechnet.

In Figur 2 ist dieser Vorgang durch die Pfeile zwischen den Bildern in der zweiten Reihe (b) und den Bildern in der dritten Reihe (c) angedeutet. Nach der beschriebenen Rückrechnung liegt nun in der dritten Reihe (c) eine neue Bildsequenz vor, bei der die Punkte auf der Reifenflanke, die mit unterschiedlichen Beleuchtungsrichtungen aufgenommen worden sind, in allen Bildern die gleichen Pixelkoordinaten haben.

Aus der beschriebenen Auswertung der Bildsequenz erhält man als weitere zusätzliche Informationen die Position des Reifens 4 in jedem Bild, den Abrollradius, die Fahrgeschwindigkeit, sowie durch Triangulation korrespondierender Bildpunkte den Abstand des Fahrzeugs 2 von der Kamera 8. Die Information über die Fahrgeschwindigkeit kann genutzt werden, um die Robustheit des Verfahrens zu steigern. Wenn die Fahrgeschwindigkeit einen vorgegebenen Grenzwert überschreitet, über dem eine sinnvolle Auswertung der Messergebnisse nicht mehr möglich ist, kann die Messung abgebrochen und mit einer entsprechenden Meldung als ungültig ausgewiesen werden.

In einem dritten Schritt erfolgt schließlich eine Fusion der bewegungskompensierten Bilder, die in Reihe (c) gezeigt sind, zu einem Ergebnisbild, das in Reihe (d) gezeigt ist, in dem alle Kanten der Beschriftung 10 kontrastreich abgebildet sind. Hierzu sind verschiedene Ansätze möglich, z.B. eine pixelweise Minimumbildung, um die Schatten in einem Bild zu fusionieren, oder eine pixelweise Maximumbildung lokaler Bildgradienten.

Im Anschluss an die beschriebene digitale Bildsequenzanalyse erfolgt eine automatische Erkennung der Beschriftung 10 im Ergebnisbild (d) mittels bekannter Texterkennungsverfahren. Die für die Betreiber des Messsystems wichtigen Informationen werden extrahiert und in ein für die Weiterverarbeitung geeignetes Textdatenformat transformiert.

Aufgrund der Bewegung des Fahrzeugs 2 während des Messvorgangs, sich möglicherweise wandelnder Lichtverhältnisse der Umgebung und/oder unterschiedlicher geometrischer Verhältnisse (z.B. Raddurchmesser, Spurweite) verschiedener Fahrzeugtypen ist die Beleuchtung der Reifen 4 ein kritisches Element der Messanordnung.

Aus diesem Grund werden im Folgenden mehrere Möglichkeiten zur Anordnung und Steuerung von Lichtquellen 61, 62 gezeigt, die einzeln oder in Kombination verwendet werden können, um die Beleuchtungssituation für jeden Reifen 4 des Fahrzeugs 2 individuell zu optimieren.

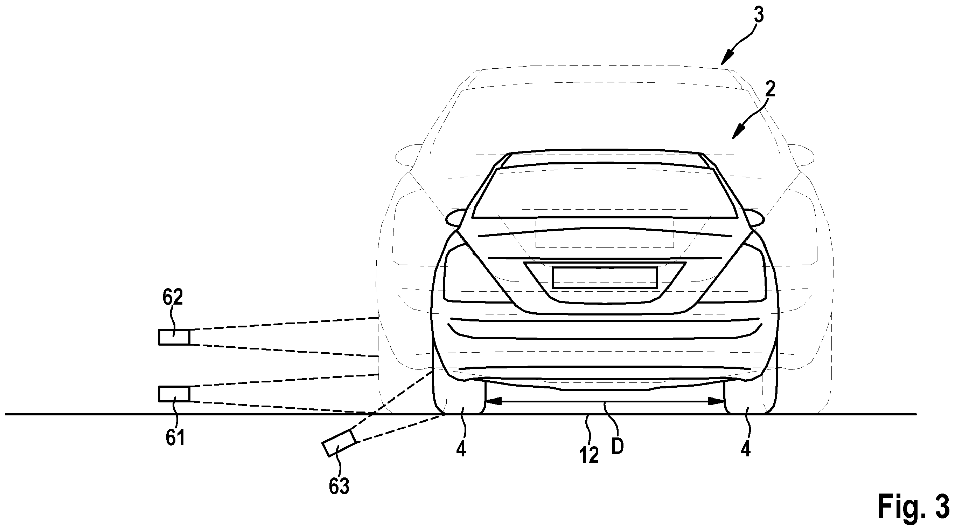

Figur 3 zeigt ein Beispiel einer möglichen Anordnung von Lichtquellen 61, 62, 63 für ein großes Fahrzeug 3 und ein kleines Fahrzeug 2 mit Blickrichtung parallel zur Fahrtrichtung F bzw. Abrollrichtung der Reifen 4. Um unterschiedliche Reifendurchmesser ausgleichen zu können, wird die Lichtquelle 61 durch eine weitere, weiter oberhalb der Fahrbahnebene 12 angebrachte Lichtquelle 62 ergänzt. Zum Ausgleich unterschiedlicher Spurweiten kann bei kleineren Fahrzeugen 2 eine in die Fahrbahnebene 12 versenkte Lichtquelle 63 zugeschaltet werden.

Zur Optimierung der Beleuchtungsverhältnisse im Verlauf der Bildsequenzaufnahme ist ein gezieltes Ansteuern der verschiedenen Lichtquellen 61, 62, 63 möglich, z. B.
- Zu- und Abschalten verschiedener Lichtquellen 61, 62, 63 entlang der Fahrtrichtung F abhängig von der aktuellen Position des Reifens 4 relativ zur jeweiligen Lichtquelle 61, 62, 63;
- Steuerung der Beleuchtungsstärke jeder Lichtquelle 61, 62, 63 und deren Beleuchtungselementen 61a, 61b, 62a, 62b;
- Zuschalten von weiteren Lichtquellen 61, 62 oberhalb der Fahrbahnebene 12 bei Reifen 4 mit großem Durchmesser;
- Zuschalten von in die Fahrbahnebene 12 versenkten Lichtquellen 63 zur optimalen Erfassung von Fahrzeugen 2 mit kleiner Spurweite D.

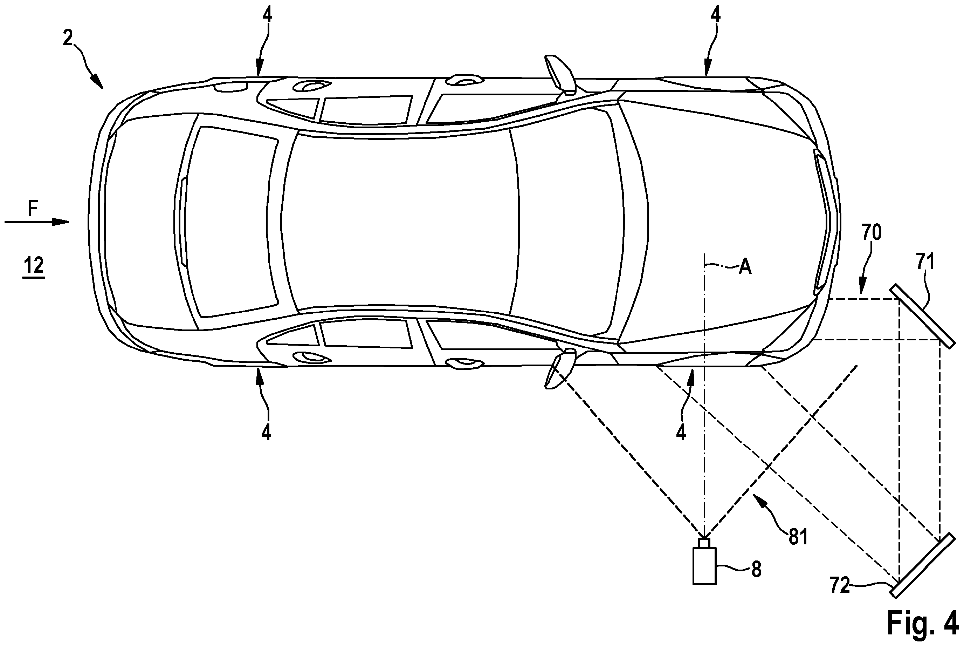

Das Fernlicht eines Kraftfahrzeugs 2 ist eine intensive und annähernd parallel abstrahlende Lichtquelle, die zur Beleuchtung der Reifenflanke verwendet werden kann. Figur 4 zeigt eine Umlenkoptik aus mehreren Spiegeln 71, 72, die angeordnet und ausgebildet sind, um die Lichtstrahlen 70 des Fernlichts eines Scheinwerfers des Fahrzeugs 2 auf die der Kamera 8 zugewandten Flanke des Reifens 4 umzulenken und somit die Scheinwerfer des Fahrzeugs 2 als Lichtquelle zu nutzen. Alternativ oder zusätzlich kann bei geeigneter Sonnenstellung auch einfallendes Sonnenlicht als Lichtquelle genutzt werden.

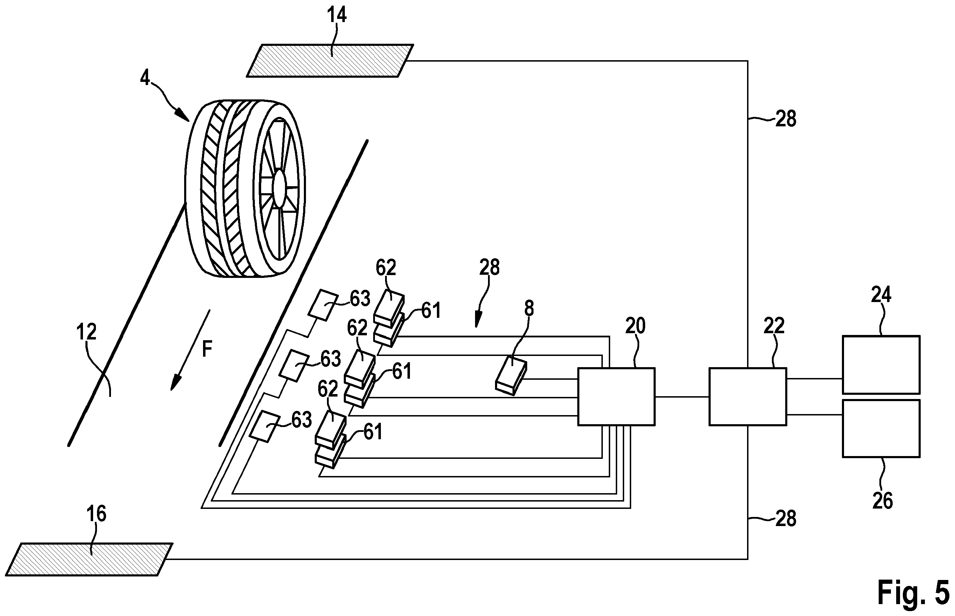

Figur 5 zeigt schematisch ein Ausführungsbeispiel einer Vorrichtung zur Erkennung von Reifenbeschriftungen mit einer Kamera 8 und einer Anordnung von Lichtquellen 61, 62, 63, die in der Fahrtrichtung F entlang einer Linie auf, über oder in einer Fahrbahnebene 12 eines Fahrzeugreifens 4 angeordnet sind. Zu einem kompletten Prüfsystem gehören mindestens zwei der in Figur 5 gezeigten Anordnungen, eine für jede Seite des Fahrzeugs 2.

Die Lichtquellen 61, 62, 63 und die Kamera 8 der Anordnung sind über elektrische Leitungen 28 oder drahtlos mit einem Steuerrechner 20 verbunden. Ein übergeordneter Server/Rechner 22 ist mit dem Steuerrechner 20 sowie einer Anzeigeeinheit 24, einem Arbeitsplatzrechner 26, einem System zur Reifendrucckontrolle 14 und/oder einem System zur Fahrzeugidentifikation 16 verbunden. Eine nicht gezeigte Energiequelle stellt die für den Betrieb notwendige Energie zur Verfügung.

Der übergeordnete Rechner/Server 22 kann in Verbindung mit anderen Systemen eine Vielzahl von Aufgaben erledigen, insbesondere
- eine Zuordnung der Analyseergebnisse der Vorrichtung zur Reifenidentifikation zu einem von einem System zur Fahrzeugidentifikation identifizierten Fahrzeug 2;
- die Ermittlung reifenspezifischer Sollwerte für die identifizierten Reifen 4 aus einer Reifendatenbank und Durchführung einer zusätzlichen Bewertung der für jeden Reifen 4 ermittelten Rollradien;
- die Übergabe reifenspezifischer Sollwerte an andere angeschlossene Prüfsysteme z.B. zur Profiltiefenmessung oder Reifendruckkontrolle für eine erweiterte Interpretation und Analyse der Messergebnisse zur Verbesserung der Diagnosequalität;
- eine Zuordnung der Diagnoseergebnisse aller am Server 22 angeschlossenen Prüfgeräte zum entsprechenden Fahrzeug 2;
- die Anzeige zumindest eines Teils der Diagnoseergebnisse auf einer Anzeigeeinheit 24, die der Fahrer des kurz davor geprüften Fahrzeuges 2 einsehen kann;
- Bereitstellen aller oder spezieller vom Prüfsystem zum jeweiligen Fahrzeug 2 ermittelter Ergebnisse an stationären oder mobilen Arbeitsplatzrechnern z.B. im Annahmebereich einer Werkstatt als Basisinformation im Kundengespräch oder in der Servicezentrale einer Spedition zur Planung des nächsten Servicetermins, auch weitere Einsatzfelder bei Fahrzeugflotten-Betreibern, Prüforganisationen, Reifenhändlern, Reifenherstellern, Fahrzeugherstellern und anderen sind denkbar; und
- Durchführen weiterer notwendiger Arbeitsschritte zur Vermarktung der fahrzeugbezogenen Diagnoseergebnisse an die unterschiedlichen Kundengruppen.

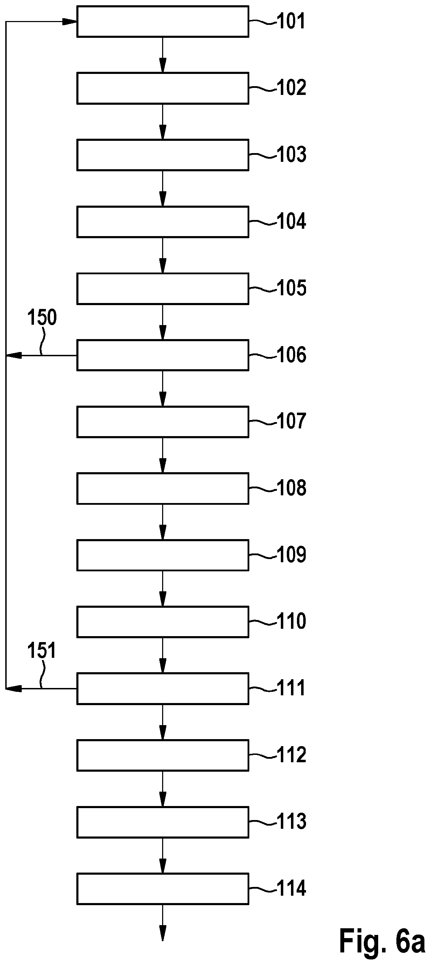

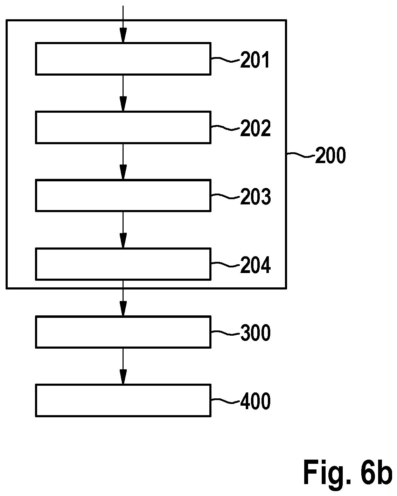

Die Figuren 6a und 6b zeigen ein Flussdiagramm, das ein erfindungsgemäßes Verfahrens zum Erkennen von Reifenbeschriftungen beschreibt:
Im ersten Schritt 101 nähert sich ein Fahrzeug 2 dem Messsystem und löst ein Triggersignal aus. Das Triggersignal startet auf beiden Fahrzeugseiten eine kontinuierliche Bildaufnahme mit vordefinierten Steuerdaten (Schritt 102).

Es folgt eine kontinuierliche Identifikation des Vorderrades in den Bildern, eine Analyse der Kontrastverhältnisse im Randbereich des Reifens 4 und eine Optimierung der Beleuchtungsstärke (Schritt 103).

Es wird geprüft, ob mehr als 50% des Reifens 4 im Kamerabild abgebildet werden, wenn ja werden die Bilder als Bildsequenz für das Vorderrad abgespeichert, gleichzeitig erfolgt eine weitere Optimierung der Beleuchtungsstärke (Schritt 104).

Im Schritt 105 folgt eine Analyse der ersten zwei Bilder der Bildsequenz, die Ermittlung der Fahrgeschwindigkeit, der Position und des Rollradius des Reifens 4 sowie der Kontrastverhältnisse im Randbereich des Reifens 4.

Ein Mittelwert der ermittelten Fahrgeschwindigkeit wird mit einem vorgegebenen Grenzwert (Schritt 106) verglichen. Überschreitet der Mittelwert der Fahrgeschwindigkeit den vorgegebenen Grenzwert, wird die Messung abgebrochen und muss wiederholt werden (Schritt 150).

Die Lichtquellen 61 für jedes Vorderrad 4 entlang der Fahrtrichtung F werden angesteuert, ggf. erfolgt auch eine Ansteuerung weiterer Lichtquellen 62, 63 oberhalb und/oder unterhalb der Fahrbahnebene 12 (Schritt 107).

Die Bildsequenz für das Vorderrad 4 wird beendet, wenn es sich so weit bewegt hat, dass es zu weniger als 50% im Kamerabild abgebildet wird. Die kontinuierliche Bildaufnahme wird im Schritt 107 weitergeführt ohne die Beleuchtungssteuerung zu verändern.

Im Schritt 108 folgt die kontinuierliche Identifikation des Reifens 4 des Hinterrades in den aufgenommenen Bildern, die Analyse der Kontrastverhältnisse im Randbereich des Reifens 4 und eine entsprechende Optimierung der Beleuchtung.

Im Schritt 109 wird geprüft, ob mehr als 50% des Reifens 4 im Kamerabild abgebildet werden, wenn ja, werden die aufgenommenen Bilder als Bildsequenz für den Reifen 4 des Hinterrades abgespeichert, dabei wird die Beleuchtungsstärke weiter fortlaufend optimiert.

Die ersten zwei Bilder der Bildsequenz werden analysiert, die Fahrgeschwindigkeit, die Position und der Rollradius des Reifens 4 sowie der Kontrastverhältnisse im Randbereich des Reifens 4 werden ermittelt (Schritt 110).

Im Schritt 111 wird ein Mittelwert der ermittelten Fahrgeschwindigkeit mit einem vorgegebenen Grenzwert verglichen. Bei Überschreiten des Grenzwertes wird die Messung abgebrochen und muss wiederholt werden (Schritt 151).

Es folgt die optimale Ansteuerung der Lichtquellen 61 für jedes Hinterrad 4 entlang der Fahrtrichtung F, ggf. auch die Ansteuerung weiterer Lichtquellen 62, 63 oberhalb und/oder unterhalb der Fahrbahnebene 12 (Schritt 112).

Die Bildsequenz für das Hinterrad wird beendet (Schritt 113), wenn dieses zu weniger als 50% im Kamerabild abgebildet wird. Die Bildaufnahme wird gestoppt (Schritt 114) und die Bildsequenzanalyse (Schritt 200) wird für jeden Reifen 4 getrennt gestartet.

Die Bildsequenzanalyse 200 umfasst: in einem ersten Schritt 201 die Bildvorverarbeitung für jedes Einzelbild z.B. mit radiometrischen und geometrischen Korrekturmethoden; in einem zweiten Schritt 202 die Bildregistrierung mittels modellbasierter Bewegungskompensation, das Zurückrechnen aller Einzelbilder auf die Position des Referenzbildes und das Ermitteln der Fahrzeuggeschwindigkeit und des Rollradius des Reifens 4; und in einem dritten Schritt 203 die Fusion der bewegungskompensierten Einzelbilder zu einem Ergebnisbild (Bildfusion).

Nach dem Beenden der Bildsequenzanalyse (Schritt 204) erfolgt im Schritt 300 für jeden Reifen 4 mit Hilfe bekannter Texterkennungsverfahren (OCR-Verfahren) die automatische Analyse der Beschriftung 10 der Reifen 4 in den Ergebnisbildern.

Schließlich erfolgt im Schritt 400 die Übergabe der erkannten Reifenbeschriftung 19 jedes Reifens 4 in einem Textformat an den übergeordneten Rechner/Server 22 zur Bereitstellung in einem IT-System z.B. an Arbeitsplatzrechnern im Büro (z.B. in der Fahrzeugannahme) oder der Werkstatt und/oder zur weiteren Verarbeitung, z.B. der Zuordnung zu dem mit einem weiteren Messsystem identifizierten Fahrzeug 2 und/oder zur Ermittlung von Solldaten z.B. aus einer Reifendatenbank für angeschlossene Systeme zur Reifen- oder Fahrzeugdiagnose.

## Patentansprüche

1. Vorrichtung zum Erkennen der Beschriftung (10) auf einem Reifen (4) mit:
einer Fahrbahnebene (12);
wenigstens einer gerichteten Lichtquelle (61, 62, 63; 71, 72), die ausgebildet ist, um den Reifen (4) zu beleuchten;
wenigstens einer Kamera (8), die ausgebildet ist, um eine Bildsequenz aus mehreren Bildern der Flanke eines auf der Fahrbahnebene (12) abrollenden Reifens (4) aufzunehmen;
einer Auswertevorrichtung (20), die ausgebildet ist,
unter Verwendung des Wissens, dass sich einzelne Punkte auf der Flanke des Reifens (4) während des Abrollens entlang einer Zykloide bewegen, die Bewegung lokaler Bildbereiche zwischen zwei beliebigen Bildern der Bildsequenz algorithmisch zu bestimmen und so für jeden Bildbereich Parameter der entsprechenden Zykloidenbewegung zu erhalten; und
mit Hilfe der so bestimmten Parameter, die Bilder der Bildsequenz auf ein beliebig herausgegriffenes zentrales Bild zurückzurechnen und durch Fusionieren der so bewegungskompensierten Bilder ein Ergebnisbild der Flanke des Reifens (4) zu synthetisieren, in dem alle Kanten der Beschriftung kontrastreich abgebildet sind, und das synthetisierte Ergebnisbild mittels eines Texterkennungsverfahren auszuwerten.

2. Vorrichtung nach Anspruch 1, wobei mehrere Lichtquellen (61) in einer Linie entlang der Abrollrichtung des Reifens (4) angeordnet sind.

3. Vorrichtung nach Anspruch 1 oder 2, wobei mehrere Lichtquellen (62) in unterschiedlichen vertikalen Abständen von der Fahrbahnebene (12) vorgesehen sind.

4. Vorrichtung nach einem der Ansprüche 1 bis 3, wobei mehrere Lichtquellen (63) an verschiedenen Positionen quer zur Abrollrichtung des Reifens (4) ausgebildet sind.

5. Vorrichtung nach einem der Ansprüche 1 bis 4, wobei wenigstens eine der Lichtquellen (61, 62, 63) getrennt ansteuerbare Beleuchtungselemente (61a, 61b, 62a, 62b) aufweist.

6. Vorrichtung nach einem der Ansprüche 1 bis 5, wobei mehrere Lichtquellen (61, 62, 63) ausgebildet sind, die den Reifen (4) mit Licht unterschiedlicher Wellenlänge beleuchten.

7. Vorrichtung nach einem der Ansprüche 1 bis 6, wobei wenigstens eine der Lichtquellen (61, 62, 63) in einem Blitzmodus betreibbar ist.

8. Vorrichtung nach einem der Ansprüche 1 bis 7 mit einer Spiegelanordnung (71, 72), die ausgebildet ist, um natürliches Sonnenlicht und/oder Licht wenigstens eines Scheinwerfers (70) des Fahrzeugs (2) auf die Flanke wenigstens eines Reifens (4) zu lenken.

9. Verfahren zum Erkennen der Beschriftung (10) auf der Flanke eines Reifens (4), wobei das Verfahren einschließt, den Reifen (4) mit wenigstens einer gerichteten Lichtquelle (61, 62, 63; 71, 72) zu beleuchten; und wobei das Verfahren weiterhin die folgenden Schritte einschließt:
Vorbeifahren des Reifens (4) an wenigstens einer Kamera (8);
Aufnehmen einer Bildsequenz aus mehreren Bildern der Flanke des an der wenigstens einen Kamera (8) vorbeifahrenden Reifens (4);
algorithmisches Bestimmen der Bewegung lokaler Bildbereiche zwischen zwei beliebigen Bildern der Bildsequenz unter Verwendung des Wissens, dass sich einzelnen Punkte auf der Flanke des Reifens (4) während des Abrollens entlang einer Zykloide bewegen, um so für jeden Bildbereich Parameter der entsprechenden Zykloidenbewegung zu erhalten;
Zurückrechnen der Bilder der Bildsequenz auf ein beliebig herausgegriffenes zentrales Bild mit Hilfe der so bestimmten Parameter;
durch Fusionieren der so bewegungskompensierten Bilder Synthetisieren eines Ergebnisbildes der Flanke des Reifens (4), in dem alle Kanten der Beschriftung kontrastreich abgebildet sind; und
Auswerten des synthetisierten zentralen Bildes mit einem Texterkennungsverfahren.

## Claims

1. A device for recognizing an inscription (10) on a tire (4), comprising:
a driving surface plane (4);
at least one directional light source (61, 62, 63; 71, 72) which is configured to illuminate the tire (4);
at least one camera (8) which is configured to record an image sequence comprising multiple images of a sidewall of a tire (4) rolling on the driving surface plane (12);
an evaluation device (20) which is configured, making use of the knowledge that individual points on the sidewall of the tire (4) move along a cycloid during rolling, to determine movement of local image areas between two arbitrary images of the image sequence using an algorithm and to thus obtain parameters of the corresponding cycloid movement for each image area; and with the aid of the parameters thus determined, is configured to calculate the images of the image sequence back to an arbitrarily selected central image, and by fusion of the thus movement-compensated images, to synthesize a result image of the sidewall of the tire (4) in which all edges of the inscription are represented with high contrast, and to evaluate the synthesized result image with the aid of a text recognition method.

2. The device according to claim 1,
wherein multiple light sources (61) are arranged in a line along the rolling direction of the tire (4).

3. The device according to claim 1 or 2,
wherein multiple light sources (62) are provided in different vertical distances from the driving surface plane (12).

4. The device according to any of claims 1 to 3,
wherein multiple light sources (63) are formed in various positions across the rolling direction of the tire (4).

5. The device according to any of claims 1 to 4,
wherein at least one of the light sources (61, 62, 63) has separately controllable lighting elements (61a, 61b, 62a, 62b).

6. The device according to any of claims 1 to 5,
wherein multiple light sources (61, 62, 63) are configured to illuminate the tire (4) with light of different wavelengths.

7. The device according to any of claims 1 to 6,
wherein at least one of the light sources (61, 62, 63) is operable in a flash mode.

8. The device according to any of claims 1 to 7,
comprising a mirror arrangement (71, 72) which is configured to direct natural sunlight and/or light of at least one headlight (70) of the vehicle (2) onto the sidewall of at least one tire (4).

9. A method for recognizing an inscription (10) on a sidewall of a tire (4), the method comprising:
illuminating the tire (4) with at least one directional light source (61, 62, 63; 71, 72); and wherein the method further comprises the following steps:
passing the tire (4) by at least one camera (8);
recording an image sequence comprising multiple images of the sidewall of the tire (4) as it passes by the at least one camera (8);
determining movement of local image areas between two arbitrary images of the image sequence using an algorithm and the knowledge that individual points on the sidewall of the tire (4) move along a cycloid during rolling in order to thereby obtain parameters of the corresponding cycloid movement for each image area;
back-calculating the images of the image sequence to an arbitrarily selected central image with the aid of the parameters thus determined;
synthesizing, by fusion of the thus movement-compensated images, a result image of the sidewall of the tire (4), in which all edges of the inscription are represented with high contrast; and
evaluating the synthesized central image with the aid of a text recognition method.

## Revendications

1. Dispositif d'identification de l'inscription (10) sur un pneu (4)
avec :
un plan de chaussée (12) ;
au moins une source lumineuse orientée (61, 62, 63 ; 71, 72), réalisée de manière à éclairer le pneu (4) ;
au moins une caméra (8), réalisée de manière à prendre une séquence d'images comprenant plusieurs images du flanc d'un pneu (4) roulant sur le plan de chaussée (12) ;
un dispositif d'évaluation (20), réalisé de manière à
déterminer de manière algorithmique le mouvement de zones d'images locales entre deux images quelconques de la séquence d'images, sachant que différents points sur le flanc du pneu (4) évoluent le long d'une cycloïde pendant le roulement, et ainsi à obtenir pour chaque zone d'image des paramètres du mouvement cycloïde correspondant ; et
à l'aide des paramètres ainsi déterminés, ramener les images de la séquence d'images à une image centrale prise au hasard et, en fusionnant les images ainsi compensées en mouvement, synthétiser une image finale du flanc du pneu (4), dans laquelle toutes les arêtes de l'inscription sont représentées de manière bien contrastée, et évaluer l'image finale synthétisée au moyen d'un procédé de reconnaissance de caractères.

2. Dispositif selon la revendication 1, dans lequel plusieurs sources lumineuses (61) sont disposées en ligne dans la direction de roulement du pneu (4).

3. Dispositif selon la revendication 1 ou 2, dans lequel plusieurs sources lumineuses (62) sont prévues à différentes distances verticales du plan de chaussée (12).

4. Dispositif selon l'une quelconque des revendications 1 à 3, dans lequel plusieurs sources lumineuses (63) sont réalisées à différentes positions transversalement à la direction de roulement du pneu (4).

5. Dispositif selon l'une quelconque des revendications 1 à 4, dans lequel au moins l'une des sources lumineuses (61, 62, 63) présente des éléments d'éclairage pouvant être commandés séparément (61a, 61b, 62a, 62b).

6. Dispositif selon l'une quelconque des revendications 1 à 5, dans lequel plusieurs sources lumineuses (61, 62, 63) sont réalisées de manière à éclairer le pneu (4) avec une lumière de différentes longueurs d'onde.

7. Dispositif selon l'une quelconque des revendications 1 à 6, dans lequel au moins l'une des sources lumineuses (61, 62, 63) peut être utilisée en mode flash.

8. Dispositif selon l'une quelconque des revendications 1 à 7 avec un agencement de miroirs (71, 72), réalisé de manière à diriger la lumière naturelle du soleil et/ou la lumière d'au moins un phare (70) du véhicule (2) sur le flanc d'au moins un pneu (4).

9. Procédé d'identification de l'inscription (10) sur le flanc d'un pneu (4), ce procédé comprenant l'éclairage du pneu (4) avec au moins une source lumineuse orientée (61, 62, 63 ; 71, 72) ; ce procédé incluant en outre les étapes suivantes :
passage du pneu (4) devant au moins une caméra (8) ;
prise d'une séquence d'images composée de plusieurs images du flanc du pneu (4) passant devant la caméra (8), une au moins ;
détermination algorithmique du mouvement de zones d'images locales entre deux images quelconques de la séquence d'images, sachant que différents points sur le flanc du pneu (4) évoluent le long d'une cycloïde pendant le roulement, afin d'obtenir pour chaque zone d'image des paramètres du mouvement cycloïde correspondant ;
ramener les images de la séquence d'images à une image centrale prise au hasard avec l'aide des paramètres ainsi déterminés ;
en fusionnant les images ainsi compensées en mouvement, synthétisation d'une image finale du flanc du pneu (4), dans laquelle toutes les arêtes de l'inscription sont représentées de manière bien contrastée ; et
évaluation de l'image centrale synthétisée au moyen d'un procédé de reconnaissance de caractères.
